# EUROPEAN PATENT SPECIFICATION

(11) **EP 1 510 633 B1**
(45) Date of publication and mention of the grant of the patent: **02.05.2007**
(21) Application number: 03714977.0
(22) Date of filing: 20.03.2003
(51) Int. Cl.: E04F 17/02, F23J 13/04, F16L 25/00

(54) **System with prefabtricated tubular modules for an airtight modular chimney or pipe**
System mit vorgefertigten Rohrmodulen für luftdichte, modulare Rauchabzüge oder Leitungen
Système avec des modules tubulaires préfabriqués pour cheminée ou conduite modulaire étanche

(30) Priority: 08.05.2002 ES 200201060
(43) Date of publication of application: 02.03.2005
(73) Proprietor: Dinak S.A., 36216 Vigo (ES)
(72) Inventor: PEREIRO SANTOS, Juan Ramon, E-36216 Vigo (ES)
(74) Representative: Temino Ceniceros, Ignacio
(86) International application number: PCT/ES2003/000134
(87) International publication number: WO 2003/095763

(56) References cited:
- DE-A- 19 827 681
- ES-T3- 2 154 769
- ES-T3- 2 156 397
- FR-A1- 2 566 094
- US-A- 3 724 878
- US-A- 4 054 306

## Description

### OBJECT OF THE INVENTION

The invention concerns an airtight joining system for prefabricated modular chimneys and pipes, the latter being metallic in nature, for either single or insulated walls and for multipurpose uses (combustion gases, heat recovery, ventilation and air conditioning, etc.), which must comply with optimum airtightness conditions, for conveying gases at different pressures and temperatures, with a view to complying with the suitability of the product, in situations becoming increasingly demanding, in order to achieve a higher level of quality and to fulfil the requirements of the regulations that are currently in force.

At present, airtight gaskets made of synthetic materials are used for the joints between modules or parts, but the qualities of these are liable to be altered as a result of the effects of the gases that are conveyed through them (acid condensation, reactions with the gases to be released, the process of aging and changes to their mechanical characteristics), apart from the restrictions to which these materials are subject which prevent them from being used at work temperatures that are higher than those permitted for these materials. In addition to the problems outlined above, the extra cost added to each part and the limited nature of the guarantees given with them must also be taken into account.

### BACKGROUND TO THE INVENTION

As relevant background, it should be cited the following documents:

The US 4054306, which consists of a tube and cylindrical surface sealing apparatus. This patent does not affect the novelty of the present invention since in the US patent it is necessary for there to be a perfect fit where size is concerned between the two pieces, if airtightness is to be achieved, and on the other hand, there is a problem of assembly / mounting, because it is necessary to insert the module into a hole, the mouth of which is not expanded. By contrast, in the present invention it is not necessary for there to be a perfect fit size-wise, given that the male part can be moved freely along the length of the truncoconical section of part until it reaches the point of tightness and airtightness that is required ("the self-retention point"), and the way in which the truncoconical section is arranged, makes the joining process much easier.

The US 3724878, which consists of a flexibly connector. In this patent the airtightness is achieved with the aid of a gasket or joint which becomes deformed by a flange, and this solution has nothing whatsoever to do with the one in the present invention.

In the ES 2154769, the fitting process is brought about by two extensive truncoconical surfaces (in contrast to the proposed cylinder end-truncoconical end system), in such a way that there is no radical pressure between modules, and all the more so where one single peripheral line is concerned - whereas such radial pressure is exerted in the case of the present invention that concerns us here- so that it is much more difficult to achieve a completely airtight situation.

In the FR 2566094, the modular connections are fitted together by means of sections that are basically cylindrical, which can never reach the degree of airtightness that is achieved with the present invention, where the fitting process takes place by the wedging or deformation of the female end.

Gaskets or joints are also used in DE 19827681 as a means for achieving airtightness, and it is precisely this system that the present invention is endeavouring to dispense with, so neither does the aforementioned document have anything to do with the latter.

The same applies to ES 2156397, where the modules are connected together with the aid of sealing gaskets (joints), which in this case are also linked with an intermediate bellows, which in this case does not form part of the module, because it is an accessory device that is separable, in contrast to the present invention, where as can be seen in the figure, it is a bellows that lies inside the conductor module itself.

Finally, the DIE 19800512 is virtually a reproduction of ES 2154769, so the same differences can be indicated against it as are indicated for the latter. In DE 19800512, with respect to its step or annular protrusion, it merely serves as a capillary locking system and plays no part in the airtightness, which is achieved by the continuous tangentiality of its side walls. In the present invention being examined this problem does not arise, in view of the fact that the tangentiality occurs only at one single or radial point, and not throughout the length of the two opposing walls.

### DESCRIPTION OF THE INVENTION

Basically and generally, the solution to the problems affecting the aforementioned gaskets, lies in removing them from the joint system between the modules or parts and replacing them with an airtight system that guarantees that it is just as airtight at the working pressures and temperatures that the products are to be subjected to.

The invention offers a system that is airtight based upon a metal-to-metal adjustment that does not require supplementary gaskets made of synthetic material (non-metallic) and that keeps the modules together by initially applying a slight pressure.

The underlying problem is a problem of assembly/mounting because it is necessary a perfect fit size-wise between the two pieces, since it is necessary to insert the module into a hole, the mouth of which is not expanded. Also, in the relevant background, the modular connections are fitted together by means of sections that are basically cylindrical, and gaskets or joints are used, which an imperfect degree of airtightness. Finally, in the relevant background the step or annular protrusions merely serves as a capillary locking system and plays no part in the airtightness, which is achieved by the continuous tangentiality of its side walls.

Against these problems, the present invention proposes the following solution: a system comprising by two modules comprises a female end and a male end, where it is not necessary for there to be a perfect fit size-wise, given that the male part can be moved freely along the length of the truncoconical section of part until it reaches the point of tightness and airtightness that is required. Also, the fitting process of the present invention takes place by the wedging or deformation of the female, dispersing with the use of gaskets or joints, making the joining process much easier. Finally, in the present invention, the tangentiality occurs only at one single or radial point, and not throughout the length of the two opposing walls.

In the present invention, it is made airtight by exactly fitting of a first tubular module that comprises a female end and a second tubular module that comprises a male end, at least one of the said male and female ends being truncoconical in shape, said male end being adapted to fit into said female end so as to provide a metal-to-metal airtight seal between said tubular modules characterized in that at least one of the said male and female ends, comprises at least one annular protrusion, each annular protrusion of one end being adapted to come into contact with a respective annular line of tangency in the other end, said metal-to-metal airtight seal being achieved by means of the overlapping sectors of the male and female ends coming into contact with each other only at said annular protrusion(s) and said respective annular lines(s) of tangency, under an axial pressure exerted only at the moment when the chimney or pipe concerned is being assembled.

In the event of using small thicknesses, such as the ones used in modular chimneys, the aforementioned characteristics lead to there being an added advantage, a guaranteed fit, owing to the elastic deformation of one of the contact surfaces.

In cases where the joints are made to conserve the elastic effect, the shape of the curve will depend upon the thickness of the material used to conserve the elasticity.

The attachment characteristic that has been indicated, that is to say, a minimum contact surface area between the two modules, also serves to achieve another important characteristic, because it is easier to separate the two modules if this proves to be necessary.

The "metal-to-metal" joining system for modules with a "circumferential" fit or seal that is the subject of this invention, is made up of one or more metallic contact gaskets, all of which are circumferential or with a small area of surface contact, between two ends that have been shaped for the purpose, with single or multiple interior-exterior fit, or single or multiple exterior-interior , by means of a plug and socket "male and female" type fitting system.

The system that is the subject of the invention is different from the current fitting or joining systems, at the contact zone and because the surfaces of that zone do not belong to identical and/or coincidental revolving surfaces.
Furthermore, if the desired airtightness level is to be achieved with the systems that are used at present, manufacturing processes must be used that have extremely exact and critical adjustment levels for the current fitting or joining processes, which together with the large contact surfaces involved, make the joining - separating processes difficult, owing to the great compressive and tensile stress that is required to make the elements fit or to separate them.

The system described makes it possible to lock the system by using clamps, specific or zonal protuberances that are used for attachment purposes, and other systems that can make the module joining process reversible or irreversible.

In one form of simple construction, the joint between two sections or modules is achieved by making one of the joint ends truncoconical, with either straight or curved shape, slotting the other end into the wall, which has annular deformation exclusively with a view to obtaining a line of contact between the walls. When assembling, axial pressure is applied during the joining process in order to obtain the required airtightness.

The protruding or "male" end of the joint can be equipped with one or more truncoconical fitting zones for the respective annular protrusions provided at the "female" end, or vice-versa.

It is also envisaged that both ends are equipped with one or more truncoconical attachment zones, or other revolving surfaces generated by an arched line, provided with one or more annular protrusions, in order to guarantee reciprocal contact with the walls of the other body.

At present there is an expansion problem affecting airtight joints for chimneys and pipes. Where "rigid" prefabricated modular chimneys and pipes for conveying hot gases are concerned, the changes in temperatures cause a linear expansion that affects the modules, and this expansion phenomenon is passed on to the connecting elements because they have rigid joints. Dilators made of metal or other materials are attached in order to prevent expansion stresses, to allow for the linear expansion of the straight sections between curves, or in their connection to boilers, exchangers, valves, etc., but these expansion devices are costly and complicated to install.

This invention also manages to overcome the problem described above, by featuring a dilator that is fitted into the modular sections of chimneys or gas or air pipes, either for single or insulated walls, and this is incorporated into the male - female fitting systems that are constructed as part of this invention; the process involves the use of one or more outer "waves" created in the wall of module or part itself, thereby allowing for an elastic deformation process brought about by the linear expansion stress of the chimney wall or pipe wall, so that the expansion is absorbed by the waves of each one of the modules or parts that constitute the modular assembly.

The above-mentioned waves may be round, trapezoidal, rectangular or any other shape that allows for elastic deformation.

With a view to making it easier to understand the characteristics of the invention, a series of pages containing plans are enclosed together with this descriptive report, of which they form an essential part; the figures shown are included merely with a view to illustrating the invention and are in no way exhaustive. The following are depicted:

### BRIEF DESCRIPTION OF THE DRAWINGS

Figure 1.- This diagram is a longitudinal profile, with a sectioned quadrant, of a male - female joint that is curved at the "male" end, for an airtight attachment system for prefabricated modular chimneys and pipes, consistent with the invention.
Figure 2.- This is a view that is similar to the one in Figure 1, showing the same male - female fit as in Figure 1, but the curve is at the "female" end.
Figure 3a.- This is a view that is similar to the previous figures, with more than one curve at the "male" end and one single conical section at the "female" end.
Figure 3b.- This is a view that is similar to the one in Figure 3a, but the "female" end is equipped with two conical sections for fitting with the curves at the "male" end.
Figures 4a and 4b.- These are two views that are similar to Figures 3a and 3b, of the male - female fit, when there is more than one curve at the "female" end and one or several conical sections, respectively, at the "male" end.
Figure 5.- This is a view of the male - female fit, with one curve at the "female" end and another curve at the "male" end.
Figures 6a and 6b.- These are two views that are similar to Figure 5, including both sections more than a curve, and containing one or more conical fitting sections, respectively.
Figure 7.- This view is a diagram of the airtight joint between two modular sections, featuring an expansion system consisting of one or more waves between the rigid joints, consistent with the invention.

### REALISATION OF A PREFERRED EMBODIMENT OF THE INVENTION

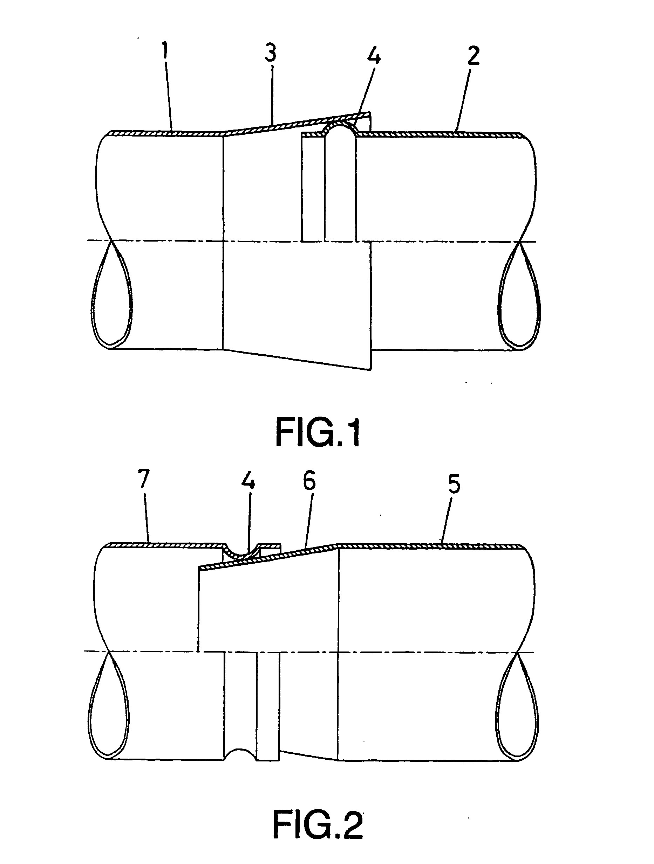

By referring to the numbering system used for the figures, we can see how the airtight joint system for prefabricated modular chimneys and pipes - which is proposed with this invention, and especially with respect to Figure 1 -, bases the hermetically sealed fit on the metal-to-metal attachment between two tubular sections or modules (1 and 2), without there being any further joints in the attachment, it only being necessary that the "female" end is conical, either straight or curved (3) that opens towards the exterior in one or other direction, and the "male" end is equipped with an annular protrusion (4) at its cylindrical end that overlaps with the "female" end (1). A surface of varying diameters is thus created throughout the length of the line (3) at the "female" end and an annular contact line between the "male" end (2) and the conical surface (3) at the "female" end, which gives an airtight fit for the male - female assembly, owing to the axial pressure that is constantly exerted from the modular assembly of the chimney or pipe.

Figure 2 shows another similar way of achieving airtight fit, by equipping the "male" end (5) with a truncoconical fitting zone (6) at the end of the "female" tube (7), and the latter is provided with an annular protrusion (4) facing inwards and defined by an arched revolving surface generated by a section of circumference, whose point of contact with the conical surface (6) of the "male" end (5) achieves the airtight seal.

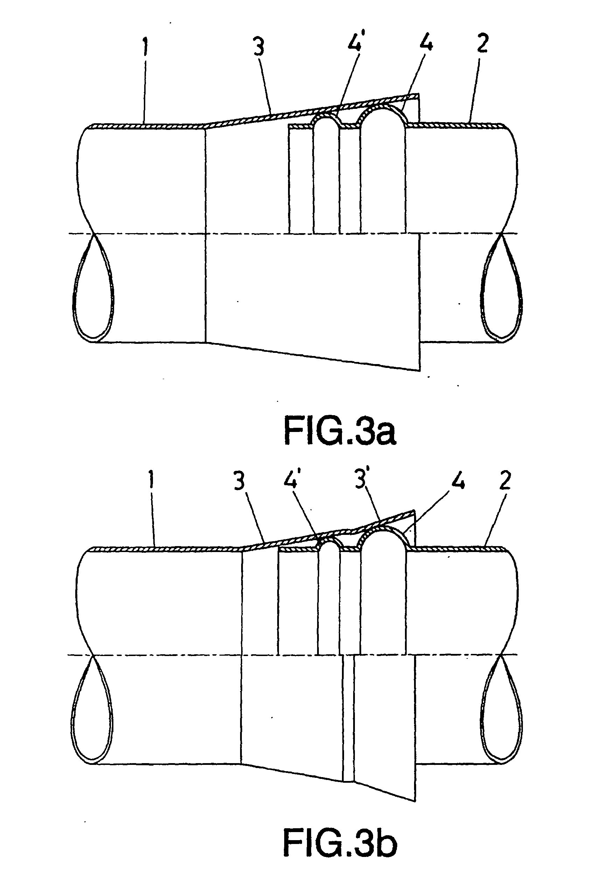

The "female" end (1) in Figure 3a has a truncoconical zone (3) for fitting into female end (2), and in this case it is equipped with two annular protrusions (4 and 4') with cross sections that have different radii of curvature for fitting under pressure and simultaneously with the truncoconical wall (3), in a very similar way to the one shown in Figure 1, but in this case with more than one annular protrusion, which serves to make the airtight joint even more effective.

Figure 3b shows a very similar realization to the one shown in Figure 3a, but in this case with two conical fitting sections for each one of the annular curves (4 and 4'), and the references for these respective truncoconical fit sections are as for references (3 and 3').

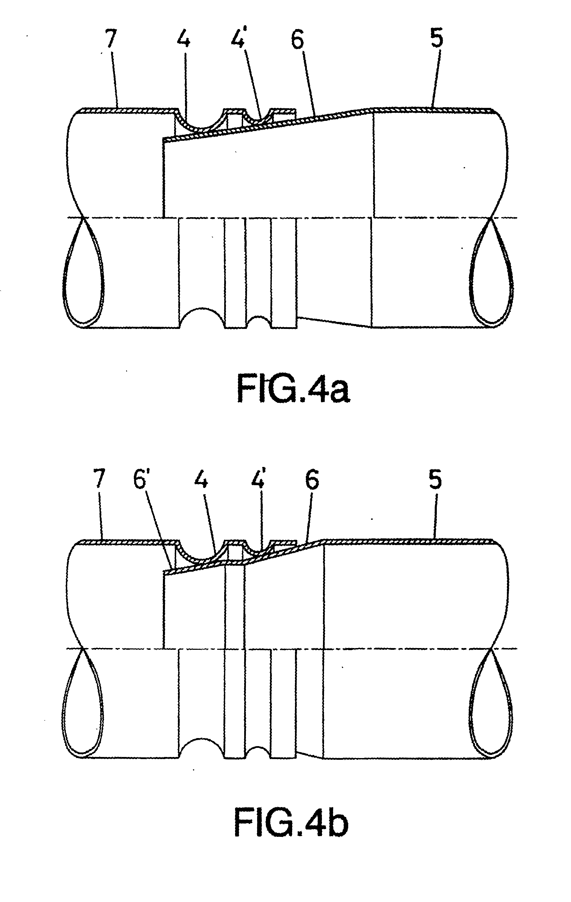

Similar realizations to those shown in Figures 3a and 3b can be seen in Figures 4a and 4b, the annular protrusions (4 and 4') virtually being on the opposite section, that is to say, at the "female" end (7), using the same numbering as in Figure 2. Reference numbers (6 and 6') are used for the two conical fitting sections in Figure 4b for the respective annular protrusions (4 and 4') at the "female" end (7).

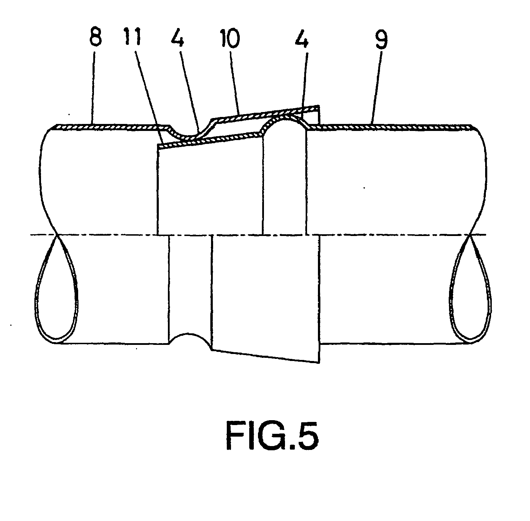

Special reference is now made to Figure 5, where we can see an airtight attachment system between a "female" end (8) and a "male" end (9), when both of them have a zone that is equipped with an annular protrusion (4) caused by a circumference arch, one of them through the interior and the other one through the exterior, for fitting under pressure against the wall of the opposite section, finished conically as far as the end concerned. The open conicity, or progressive variation of the diameter, of "female" section (8) has been given reference number (10) and the closed conicity or with progressive reduction in the diameter, of "male" end 9, has been given reference number (11).

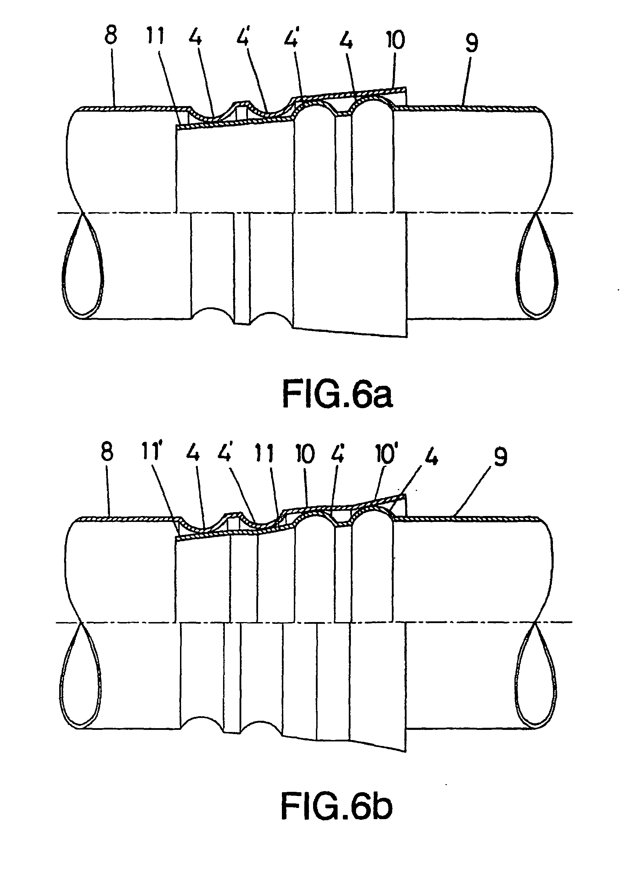

Finally, Figures 6a and 6b show ways of realization that are similar to the fitting structure shown in Figure 5, where there is more than one annular protrusion for the profile in the circumference arch, at both ends of the attachment, "female" (8) and "male" (9). In Figure 6b, the reference numbers for the different conical attachment sections for each one of the annular protrusions (4 and 4') are (11 and 11') for the "male" end, and (10 and 10') for the "female" end.

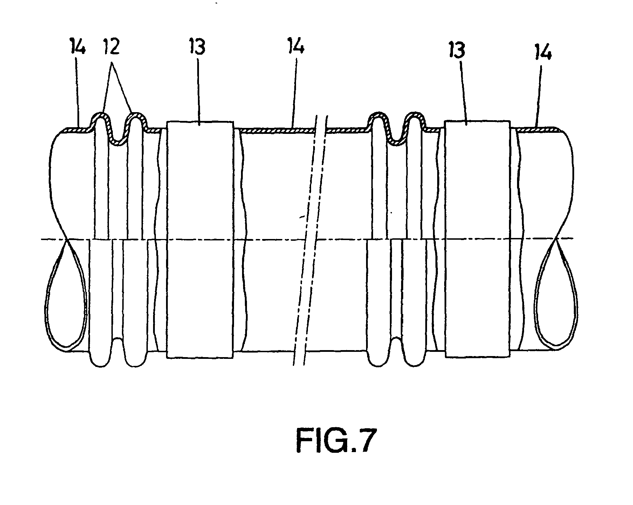

Figure 7 shows a diagram of a realization in which two outer waves (12) are used at the end zones adjoining the rigid attachments (13) for the different modular sections that constitute a chimney or general piping for conveying air or gas. The waves (12) guarantee an elastic deformation due to the linear expansion stress exerted on the wall of the chimney (14). In this example of a realization, the outer waves (12) or annular ones, have a round section, but they can also be of any other form, truncated or mixed, as we have already pointed out, and the number of waves (12) can also be variable.

## Claims

1. System comprising metallic prefabricated tubular modules for a modular chimney or pipe, wherein a first tubular module comprises a female end (1, 7, 8) and a second tubular module comprises a male end (2, 5, 9), at least one of the said male and female ends (1, 2) being truncoconical in shape, said male end being adapted to fit into said female end so as to provide a metal-to-metal airtight seal between said tubular modules **characterized in that** at least one of the said male and female ends (1, 2) comprises at least one annular protrusions (4, 4'), each annular protrusion of one end being adapted to come into contact with a respective annular line of tangency in the other end, said metal-to-metal airtight seal being achieved by means of the overlapping sectors of the male and female ends coming into contact with each other only at said annular protrusion(s) and said respective annular lines(s) of tangency, under an axial pressure exerted only at the moment when the chimney or pipe concerned is being assembled.

2. System according to Claim 1, **characterised in that** said female end (1) has a conical section (3) with either a straight or curved line, open towards the exterior, and said male end (2) is cylindrical with at least one annular protrusion (4, 4') for simultaneous contact with respective annular lines in the attachment process.

3. System according to Claim 1, **characterized in that** said female end (7) is cylindrical with at least one annular dip (4, 4') that fits into said male end (6) which is truncoconical, with either a straight or curved line, closed towards the end, making contact with two annular lines in the attachment process.

4. system according to Claim 2, **characterised in that** said female end (1) has one or more truncoconical sections with either a straight or curved line (3, 3') for fitting into the respective annular protrusions (4, 4'), of said male end (2).

5. System according to Claim 3, **characterised in that** said male end (2) has one or more truncoconical sections with either a straight or curved line (6, 6') for fitting into the respective annular protrusions (4, 4'), of said female end (7).

6. System according to Claim 1, **characterised in that** said male end (9) and said female end (8) have one or more truncoconical sections with either a straight or curved line (10, 10') and (11, 11') for fitting purposes, all of them having one or more annular protrusions (4, 4'), which make reciprocal contact with the walls of the other body.

7. System according to Claim 1, **characterised in that**, at the end of the attachment, the modules (14) contain one or more outer waves (12) to absorb the linear expansions, and these waves (12) have an arched, truncated or mixed profile.

## Patentansprüche

1. System, das vorgefertigte metallische rohrförmige Module für einen modularen Abzug oder ein modulares Rohr aufweist, wobei ein erstes rohrförmiges Modul am Ende ein Mutterteil (1, 7, 8) und ein zweites rohrförmiges Modul am Ende ein Vaterteil (2, 5, 9) umfasst, wenigstens eines dieser Vater- und Mutterteile (1, 2) kegelstumpfförmig geformt ist und das erwähnte Vaterteil so ausgelegt ist, das es in das erwähnte Mutterteil passt, um zwischen diesen rohrförmigen Modulen eine luftdichte Metall-auf-Metall-Abdichtung herzustellen und das sich **dadurch kennzeichnet, dass** wenigstens eines der erwähnten Vater- und Mutterteile (1, 2) mindestens einen ringförmigen Vorsprung (4, 4') aufweist und jeder ringförmige Vorsprung eines Endes so gestaltet ist, dass er am anderen Ende mit einer jeweiligen ringförmigen Tangentiallinie in Berührung kommt, wobei erreicht wird, dass die besagte luftdichte Metall-auf-Metall-Abdichtung durch die überlappenden Abschnitte der Vater- und Mutterteile an diesem/diesen ringförmigen Vorsprung/Vorsprüngen und dieser/diesen ringförmigen Tangentiallinie(n) nur unter einem axialen Druck in Kontakt kommen, der lediglich ausgeübt wird, wenn der betreffende Abzug oder das betreffende Rohr zusammengebaut wird.

2. System gemäß Patentanspruch 1, das sich **dadurch kennzeichnet, dass** das besagte Mutterteil (1) einen kegelförmigen Abschnitt (3) mit entweder gerader oder gebogener Form hat und nach außen offen ist und das besagte Vaterteil (2) zylinderförmig ist und wenigstens einen ringförmigen Vorsprung (4, 4') hat, um beim Zusammenbau gleichzeitigen Kontakt zu den jeweiligen Ringlinien zu haben.

3. System gemäß Patentanspruch 1, das sich **dadurch kennzeichnet, dass** das besagte Mutterteil (7) zylindrisch ist und wenigstens eine ringförmige Vertiefung (4, 4') hat, die in das besagte Vaterteil (6) passt, das kegelstumpfförmig ist und entweder eine gerade oder gebogene Form hat und zum Ende hin geschlossen ist, wobei beim Zusammenbau Kontakt zu zwei Ringlinien hergestellt wird.

4. System gemäß Patentanspruch 2, das sich **dadurch kennzeichnet, dass** das besagte Mutterteil (1) einen oder mehrere kegelstumpfförmige Abschnitte mit gerader oder gebogener Form (3, 3') hat, um in die jeweiligen ringförmigen Vorsprünge (4, 4') des besagten Vaterteils (2) zu passen.

5. System gemäß Patentanspruch 3, das sich **dadurch kennzeichnet, dass** das besagte Vaterteil (2) einen oder mehrere kegelstumpfförmige Abschnitte mit gerader oder gebogener Form (6, 6') hat, um in die jeweiligen ringförmigen Vorsprünge (4, 4') des besagten Mutterteils (7) zu passen.

6. System gemäß Patentanspruch 1, das sich **dadurch kennzeichnet, dass** das besagte Vaterteil (9) und das besagte Mutterteil (8) aus Gründen der Befestigung einen oder mehrere kegelstumpfförmige Abschnitte mit gerader oder gebogener Form, (10, 10') und (11, 11'), haben, wobei alle einen oder mehrere ringförmige Vorsprünge (4, 4') aufweisen, die zu den Wänden des anderen Körpers wechselseitig Kontakt herstellen.

7. System gemäß Patentanspruch 1, das sich **dadurch kennzeichnet, dass** die Module (14) am Ende der Befestigung eine oder mehrere äußere Wellungen (12) haben, um lineare Dehnungen aufzunehmen und diese Wellungen (12) haben ein bogenförmiges, abgestumpftes oder gemischtes Profil.

## Revendications

1. Système composé de modules tubulaires préfabriqués métalliques pour une cheminée ou un tuyau modulaires, où un premier module tubulaire comporte une extrémité femelle (1, 7, 8) et un second module tubulaire comporte une extrémité mâle (2, 5, 9), au moins l'une des dites extrémités mâle et femelle (1, 2) ayant une forme tronconique, la dite extrémité mâle étant adaptée pour s'insérer dans la dite extrémité femelle de sorte à fournir un scellement hermétique métal-à-métal entre les dits modules tubulaires, **caractérisé par le fait qu**'au moins une des dites extrémités mâle et femelle (1, 2) comporte au moins une saillie annulaire (4, 4'), chaque saillie annulaire d'une extrémité étant adaptée pour entrer en contact avec une ligne annulaire respective de tangence de l'autre extrémité, le dit scellement hermétique métal-à-métal étant obtenu au moyen de secteurs de chevauchement des extrémités mâle et femelle entrant en contact l'une avec l'autre seulement au niveau de la(des) dite(s) saillie(s) annulaire(s) et de la(des) dite(s) ligne(s) annulaire(s) de tangence respective(s) sous une pression exercée seulement au moment où la cheminée ou le tuyau concerné est assemblé.

2. Système conformément à la Revendication 1, **caractérisé par le fait que** la dite extrémité femelle (1) a une section conique (3) avec une ligne droite ou courbe, ouverte en direction de l'extérieur, et que la dite extrémité mâle (2) est cylindrique avec au moins une saillie annulaire (4, 4') pour un contact simultané avec les lignes annulaires respectives lors du processus de fixation.

3. Système conformément à la Revendication 1, **caractérisé par le fait que** la dite extrémité femelle (7) est cylindrique avec au moins une inclinaison annulaire (4, 4') qui s'adapte dans la dite extrémité mâle (6) qui est tronconique, avec une ligne droite ou courbe, fermée en direction de l'extrémité, qui fait contact avec deux lignes annulaires lors du processus de fixation.

4. Système conformément à la Revendication 2, **caractérisé par le fait que** la dite extrémité femelle (1) a une ou plusieurs sections tronconiques avec une ligne droite ou courbe (3, 3') pour adaptation dans les saillies annulaires respectives (4, 4') de la dite extrémité mâle (2).

5. Système conformément à la Revendication 3, **caractérisé par le fait que** la dite extrémité mâle (2) a une ou plusieurs sections tronconiques avec une ligne droite ou courbe (6, 6') pour adaptation dans les saillies annulaires respectives (4, 4') de la dite extrémité femelle (7).

6. Système conformément à la Revendication 1, **caractérisé par le fait que** les dites extrémités mâle (9) et femelle (8) ont une ou plusieurs sections tronconiques avec une ligne droite ou courbe (10, 10') et (11, 11') dans un but d'adaptation, ayant toutes une ou plusieurs saillies annulaires (4, 4') qui font réciproquement contact avec les parois de l'autre corps.

7. Système conformément à la Revendication 1, **caractérisé par le fait qu**'à l'extrémité de la fixation, les modules (14) contiennent une ou plusieurs ondes externes (12) pour absorber les dilatations linéaires et que ces ondes (12) ont un profil en voûte, tronqué ou mixte.
